# EUROPÄISCHE PATENTANMELDUNG

(11) **EP 1 231 724 A1**
(43) Veröffentlichungstag der Anmeldung: **14.08.2002**
(21) Anmeldenummer: 02360039.8
(22) Anmeldetag: 23.01.2002
(51) Int. Cl.: H04B 10/10

(54) **Verfahren zur Übertragung eines optischen Signals durch den freien Raum**

(30) Priorität: 03.02.2001 DE 10104913
(71) Anmelder: ALCATEL, 75008 Paris (FR)
(72) Erfinder: Weis, Bernd X., Dr., 70825 Korntal-Münchingen (DE)
(74) Vertreter: Urlichs, Stefan, Dipl.-Phys.

(57) **Zusammenfassung**

Ein Verfahren zum Übertragen eines Signals zur Übermittlung von Information von einer Signalquelle (1) zu einer räumlich davon entfernten Signalsenke (7), wobei das Signal zumindest über einen Teil der Strecke zwischen der Signalquelle und der Signalsenke als optisches Signal über mindestens eine freie optische Wegstrecke zwischen einem optischen Sender (3) und einem optischen Empfänger (5) übermittelt wird, ist dadurch gekennzeichnet, dass das Signal in zwei oder mehr identische Signale vervielfältigt bzw. aufgespaltet wird, dass jedes dieser untereinander identischen Signale jeweils als optisches Signal über einen eigenen optischen Pfad, der mindestens eine freie optische Wegstrecke umfasst, von einem optischen Sender zu einem optischen Empfänger übertragen wird, und dass die empfangenen Signale über einen Signalkombinierer (6) zusammengefasst und als einziges Signal der Signalsenke zugeführt werden. Damit kann mit einfachsten Mitteln eine zuverlässige Übermittlung von optischen Signalen durch den freien Raum sichergestellt werden.

## Beschreibung

Die Erfindung betrifft ein Verfahren zum Übertragen eines Signals zur Übermittlung von Information von einer Signalquelle zu einer räumlich davon entfernten Signalsenke, wobei das Signal zumindest über einen Teil der Strecke zwischen der Signalquelle und der Signalsenke als optisches Signal über mindestens eine freie optische Wegstrecke zwischen einem optischen Sender und einem optischen Empfänger übermittelt wird. Weiter betrifft die Erfindung auch Computerprogramme und Vorrichtungen zur Unterstützung und Durchführung eines derartigen Verfahrens, insbesondere geeignete Signalübertragungseinrichtungen, Servereinheiten, Prozessorbaugruppen und programmierbare Gate-Array-Baugruppen.

Ein solches Verfahren ist bekannt aus der EP 0 962 795 A2.

In einigen Fällen der Signalübertragung kann es vorteilhaft sein, optische Signale über den freien Raum zu übermitteln, anstatt optische Trägermedien wie beispielsweise optische Fasern zu verwenden. Die optische Signalübermittlung über den freien Raum bringt vor allem Kostenvorteile mit sich, wenn die zu überwindenden Distanzen kurz sind und wenn die Sichtstrecke im wesentlichen ungestört ist. In der oben genannten EP 0 962 795 A1 beispielsweise wurde die Übertragung von optischen Signalen für eine Kommunikation zum Austausch von Daten zwischen zwei räumlich voneinander getrennten Geräten eingesetzt.

Eine optische Kommunikationsverbindung über den freien Raum setzt allerdings eine freie Sichtlinie ohne Hindernisse voraus, so dass nichts mit dem optischen Signal auf der Strecke interferieren kann. Falls Hindernisse auftauchen können, beispielsweise wenn ein Vogel oder ein Regentropfen den Lichtstrahl kreuzt, sind Mechanismen erforderlich, die eine fehlerfreie Übertragung sicherstellen.

Aufgabe der vorliegenden Erfindung ist es demgegenüber, ein Verfahren der eingangs beschriebenen Art mit möglichst einfachen Mitteln dahingehend weiterzubilden, dass eine zuverlässige Übermittlung von optischen Signalen durch den freien Raum sichergestellt wird.

Erfindungsgemäß wird diese Aufgabe auf ebenso überraschend einfache wie wirkungsvolle Art und Weise dadurch gelöst, dass das Signal in zwei oder mehr identische Signale vervielfältigt bzw. aufgespaltet wird, dass jedes dieser untereinander identischen Signale jeweils als optisches Signal über einen eigenen optischen Pfad, der mindestens eine freie optische Wegstrecke umfasst, von einem optischen Sender zu einem optischen Empfänger übertragen wird, und dass die empfangenen Signale über einen Signalkombinierer zusammengefasst und als einziges Signal der Signalsenke zugeführt werden.

Auf diese Weise kann beispielsweise in einer Situation, wenn einer oder sogar mehrere der freien optischen Wegstrecken kurzzeitig durch ein Hindernis blockiert werden, beispielsweise aufgrund von atmosphärischen Einwirkungen wie Regen, Schnee oder Schmutzpartikel, oder beispielsweise durch einen Vogel, auf den verbleibenden weiteren freien optischen Wegstrecken das Signal dennoch übertragen werden.

Vorteilhaft ist eine Variante des erfindungsgemäßen Verfahrens, die sich dadurch auszeichnet, dass das Signal aus der Signalquelle ein elektromagnetisches Signal ist, welches in einem Signalaufspalter in mehrere mit dem ursprünglichen Signal in seinem Informationsgehalt identische Signale aufgespaltet wird, die anschließend in einer entsprechenden Anzahl von optischen Sendern jeweils zu einem optischen Signal umgewandelt und/oder verstärkt werden, und dass die so erzeugten, untereinander identischen optischen Signale jeweils über einen zugeordneten optischen Pfad zeitlich und/oder räumlich parallel übertragen werden.

Bei einer wesentlich vereinfachten, alternativen Verfahrensvariante ist nur ein optischer Sender vorgesehen, dem ein passiver Strahlteiler nachgeschaltet ist, in welchem aus dem einen optischen Signal des optischen Senders eine Vielzahl untereinander identischer optischer Signale erzeugt wird. Dadurch lassen sich n-1 optische Sender einsparen.

Bei einer weiteren Verfahrensvariante ist vorgesehen, dass die untereinander identischen optischen Signale jedes optischen Pfads jeweils in einem optischen Empfänger in elektrische Signale umgewandelt werden. Die elektrischen Signale tragen dann die entsprechende Information und können in geeigneten Vorrichtungen weiterbearbeitet und weitergeleitet werden bis zur Signalsenke.

Eine Weiterbildung dieser Verfahrensvariante sieht vor, dass die elektrischen Signale aus den diversen optischen Empfängern einem Signalkombinierer zugeführt werden, der aus den diversen elektrischen Signalen ein einziges Signal erzeugt, welches der Signalsenke zugeführt wird.

Vorteilhafterweise kann der Signalkombinierer als Evaluator ausgeführt sein, in welchem aus den diversen elektrischen Eingangssignalen ein einziges Ausgangssignal erzeugt wird, welches dem Ausgangssignal aus der Signalquelle am besten entspricht.

Besonders vorteilhaft ist eine Weiterbildung, bei der im Evaluator einander entsprechende Informationseinheiten der diversen Eingangssignale detektiert werden und über eine Mehrheitsschaltung daraus jeweils eine einzige Informationseinheit gebildet und dem Ausgangssignal aufgeprägt wird. Auf diese Weise können Übertragungsfehler auf den einzelnen Kanälen optimal unterdrückt werden.

Besonders vorteilhaft ist es auch, wenn bei den oben beschriebenen Verfahrensvarianten in den optischen Empfängern eine koordinierte Kompensation der Laufzeiten der einzelnen optischen Signale aus den unterschiedlichen optischen Pfaden vorgenommen wird.

Ebenso kann es sich als besonders günstig erweisen, wenn in den optischen Empfängern eine koordinierte Leistungsanpassung der einzelnen optischen Signale aus den unterschiedlichen optischen Pfaden vorgenommen wird.

Bei einer alternativen Verfahrensvariante ist vorgesehen, dass die optischen Signale aus den diversen optischen Pfaden einem passiven Strahlenüberlagerer zugeführt werden, der sie zu einem einzigen optischen Signal zusammenfasst, welches einem nachgeschalteten optischen Empfänger zugeführt wird.

Auf diese Weise können n-1 optische Empfänger bei einer Verwendung von n freien optischen Wegstrecken eingespart werden.

Ganz besonders bevorzugt ist eine Variante des erfindungsgemäßen Verfahrens, bei der die optischen Signale gepulst übertragen werden, wobei die den optischen Signalen aufgeprägten Informationseinheiten auf Pulse abgebildet werden. Damit wird ein ganz wesentlicher Freiheitsgrad für die Handhabung der Signalübertragung und eine eventuelle Bearbeitung der Signale eröffnet.

Besonders bevorzugt ist eine Weiterbildung dieser Ausführungsform, bei der auf mindestens einem optischen Pfad die Abbildung von Informationseinheiten auf Pulse invertiert und nach Durchlaufen einer optischen Strecke rückinvertiert wird. Für den Fall, dass auf sämtlichen optischen Pfaden kein Puls ankommt, kann auf diese Weise zwischen einer Übertragung einer Serie von 0-Informationseinheiten und dem davon völlig unterschiedlichen Fall einer Unterbrechung sämtlicher übertragener Signale diskriminiert werden.

Vorteilhaft ist auch eine Weiterbildung, die vorsieht, dass bei Vorhandensein eines Pulses aus mindestens einem optischen Signal der diversen optischen Pfade ein entsprechender Puls im Ausgangssignal des passiven Strahlenüberlagerers erzeugt und im nachgeschalteten optischen Empfänger als entsprechende Informationseinheit interpretiert wird. So kann selbst bei einem minimalen Durchkommen der optischen Signale auf den diversen Pfaden immer noch die Signalübertragung in korrekter Form aufrecht erhalten werden.

Zur Anpassung an unterschiedliche Einsatzbedingungen ist eine Verfahrensvariante von Vorteil, bei der das optische Signal auf mindestens einem optischen Pfad durch mindestens ein optisches Relais zwischen zwei optischen Wegstrecken verstärkt und/oder umgeleitet wird. Dadurch können auch größere Wegstrecken überbrückt und beispielsweise massive Hindernisse umgangen werden.

Um vergleichbare optische Signale aus den diversen optischen Pfaden im Signalkombinierer zu erhalten, empfiehlt es sich, die optischen Pfade so zu gestalten, dass sie jeweils dieselbe optische Weglänge repräsentieren.

Insbesondere ist es von Vorteil, wenn die diversen optischen Pfade untereinander identisch ausgestaltet sind.

Alternativ kann aber auch eine Laufzeitanpassung der optischen Signale der diversen optischen Pfade vorgenommen werden.

Eine ganz besonders bevorzugte Variante des erfindungsgemäßen Verfahrens schließlich sieht vor, dass das zu übertragende Signal vor seiner Übertragung in Signalpakete aufgespaltet wird, dass jedem Signalpaket eine für das Signalpaket charakteristische Signalsequenz beigeordnet und zusammen mit dem jeweiligen Signalpaket mit einer höheren Bitrate als das ursprüngliche Signal übertragen wird, und dass die charakteristische Signalsequenzen zur Erkennung und gegebenenfalls zur Korrektur von Fehlern in den übertragenen Signalen und/oder zur Synchronisierung der Übertragungsstrecke verwendet werden.

Dadurch kann auf einem von der erfindungsgemäßen Aufspaltung des Ursprungssignals und Übermittlung auf parallelen optischen Pfaden völlig unabhängigen Weg nochmals sichergestellt werden, dass Übertragungsfehler, wie sie beispielsweise bei einer Unterbrechung der freien optischen Wegstrecken auftreten können, wenn ein Hindernis in die Sichtlinie gerät, absolut zuverlässig vermieden werden.

In den Rahmen der vorliegenden Erfindung fällt auch eine Signalübertragungseinrichtung zur Durchführung des erfindungsgemäßen Verfahrens mit einer Signalquelle zur Erzeugung eines zu übertragenden Signals, einem Signalaufspalter zum Vervielfältigen bzw. Aufspalten dieses Signals in zwei oder mehr identische Signale, einer der Anzahl dieser untereinander identischen Signale entsprechenden Menge von optischen Pfaden, von denen jeder mindestens eine freie optische Wegstrecke umfasst, einem oder mehreren optischen Empfängern zum Empfang der übertragenen optischen Signale, sowie einem Signalkombinierer, in welchem die übertragenen Signale zusammengefasst und als einziges Signal einer Signalsenke zugeführt werden können.

Eine Ausführungsform der erfindungsgemäßen Signalübertragungseinrichtung zeichnet sich dadurch aus, dass pro optischem Pfad ein optischer Sender vorgesehen ist, der die aus dem Strahlteiler kommenden Signale in optische Signale umwandelt.

Erheblich einfacher ist eine alternative Ausführungsform, bei der ein optischer Sender zur Erzeugung eines optischen Signals aus dem Ausgangssignal der Signalquelle vorgesehen ist, dem als Signalaufspalter ein passiver Strahlteiler nachgeschaltet ist. Auf diese Weise lassen sich bei n verwendeten optischen Pfaden n-1 optische Sender einsparen.

Vorzugsweise umfassen der oder die optischen Sender mindestens einen Laser, wodurch sich dessen vorteilhafte Eigenschaften, wie beispielsweise die Erzeugung kohärenten Lichts, hohe Strahlbündelungsmöglichkeiten, äußerst geringe Strahldivergenz und hohe Leistung für die erfindungsgemäße Signalübertragung ausnutzen lassen.

In einer weiteren Ausführungsform der erfindungsgemäßen Signalübertragungseinrichtung ist jeweils ein optischer Empfänger pro optischem Pfad für jedes der untereinander identischen optischen Signale vorgesehen, welcher die empfangenen optischen Signale in elektrische Signale umwandelt.

Diese Ausführungsform kann vorteilhaft dadurch verbessert werden, dass der Signalkombinierer als Evaluator ausgeführt ist.

Eine alternative Ausführungsform der erfindungsgemäßen Signalübertragungseinrichtung sieht vor, dass der Signalkombinierer als ein passiver Strahlenüberlagerer ausgeführt ist, dem die optischen Signale aus den diversen optischen Pfaden zugeführt werden, und der sie zu einem einzigen optischen Signal zusammenfasst, welches einem nachgeschalteten optischen Empfänger zugeführt wird. Auf diese Weise können bei n optischen Pfaden n-1 optische Empfänger gegenüber der oben beschriebenen Ausführungsform eingespart werden.

Um Anpassungsmöglichkeiten an unterschiedliche Gegebenheiten der Signalübertragungsstrecke zu erhalten, ist bei einer weiteren vorteilhaften Ausführungsform der erfindungsgemäßen Signalübertragungseinrichtung auf mindestens einem optischen Pfad mindestens ein optisches Relais zwischen zwei optischen Wegstrecken vorgesehen, in welchem das entsprechende optische Signal verstärkt und/oder umgeleitet wird.

Weiterhin fällt in den Rahmen der vorliegenden Erfindung auch eine Servereinheit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine in Einrichtungen zur Signalübertragung, beispielsweise in einem IP (=Internet Protocol)-Netzwerk oder einer Telekommunikationsanlage implementiert werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig.1: ein Prinzipbild einer ersten Ausführungsform der erfindungsgemäßen Signalübertragungseinrichtung mit jeweils einem optischen Sender und einem optischen Empfänger pro freier optischer Wegstrecke;
- Fig.2: eine zweite Ausführungsform mit nur einem optischen Sender für alle optischen Wegstrecken, aber mehreren optischen Empfängern;
- Fig.3: eine dritte Ausführungsform mit nur einem optischen Sender und nur einem optischen Empfänger für alle optischen Wegstrecken; und
- Fig.4: ein Schema für eine mögliche Aufteilung des zu übermittelnden Signals in diverse Signalpakete entsprechend einer Variante des erfindungsgemäßen Verfahrens.

Gemäß der vorliegenden Erfindung wird ein zu übertragendes Signal in zwei oder mehr identische Signale vervielfältigt, bzw. aufgespaltet, jedes dieser untereinander identischen Signale jeweils als optisches Signal über einen eigenen optischen Pfad, der mindestens eine freie optische Wegstrecke umfasst, von einem optischen Sender zu einem optischen Empfänger übertragen und die empfangenen Signale über einen Signalkombinierer zusammengefasst und als einziges Signal einer Signalsenke zugeführt.

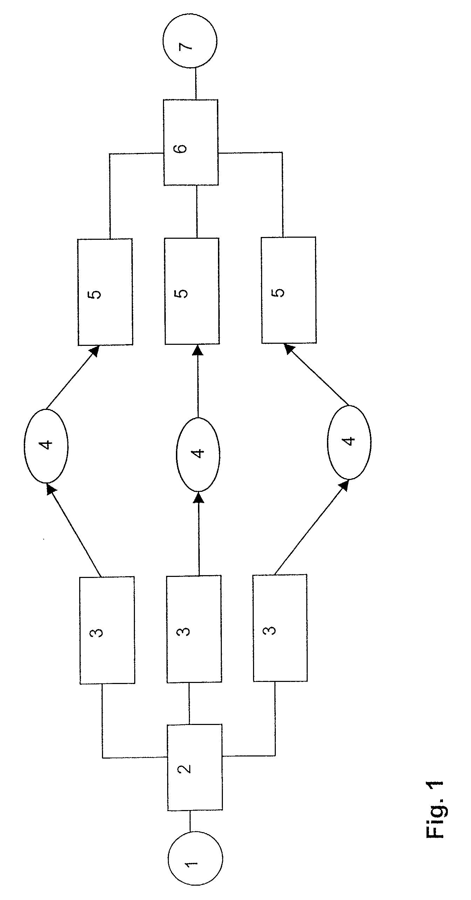

In Fig. 1 ist eine Signalübertragungseinrichtung zur Durchführung des oben beschriebenen erfindungsgemäßen Verfahrens dargestellt, in welcher eine Aufspaltung des zu übertragenden Signals in mehrere identische Signale mit gleichem Informationsgehalt wie das Ursprungssignal und Übermittlung derselben über jeweils eine eigene freie optische Wegstrecke vorgesehen ist.

Dabei wird das zu übertragende Signal in einer Signalquelle 1 erzeugt. An dieser Stelle kann es sich beispielsweise noch um ein elektrisches Signal, aber auch schon um ein optisches Signal handeln. In einem nachgeschalteten Signalaufspalter 2 wird nun das zu übertragende Signal in mehrere identische Signale, im vorliegenden Fall in drei Signale vervielfältigt, die jeweils einem optischen Sender 3, insbesondere einem Laser zugeführt werden. Von hier aus werden die optischen Signale auf jeweils einer eigenen freien optischen Wegstrecke, auf der sich auch optische Relais 4 wie Verstärker oder Umlenkeinrichtungen befinden können, zu jeweils einem zugehörigen optischen Empfänger 5 gesendet. Die empfangenen Signale der diversen optischen Empfänger 5 werden einem Signalkombinierer 6 zugeführt, wo sie zu einem einzigen Signal zusammengefasst und an eine Signalsenke 7 übertragen werden, die das Ziel der gesamten Signalübertragung darstellt.

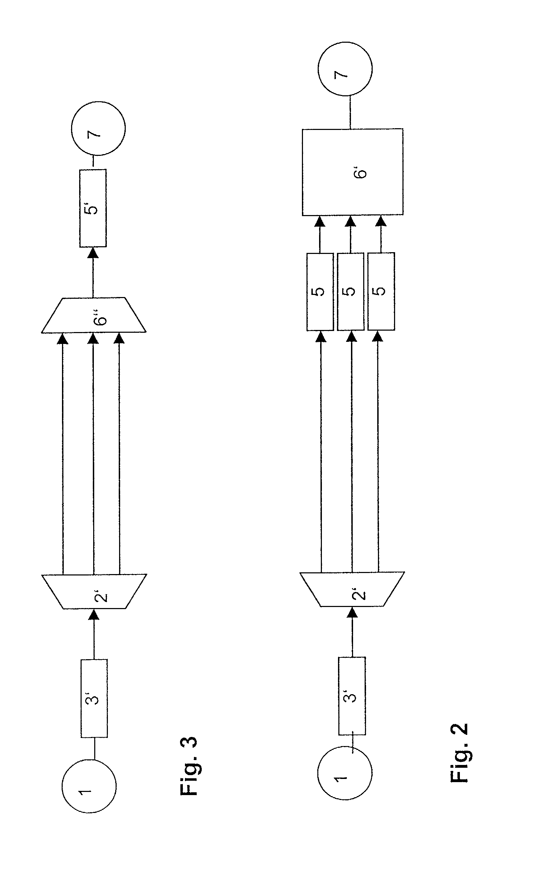

In Fig. 2 ist eine gegenüber der Signalübertragungseinrichtung nach Fig.1 erheblich vereinfachte Ausführungsform dargestellt, bei welcher das aus der Signalquelle 1 abgehende Originalsignal zunächst in einem einzigen optischen Sender 3', vorzugsweise einem Laser, in ein optisches Signal umgewandelt wird. Dieses wird sodann einem passiven Strahlteiler 2' zugeführt, der als Signalaufspalter wirkt und daraus mehrere (im vorliegenden Fall 3) identische optische Signale erzeugt. Diese werden wiederum jeweils auf einem eigenen optischen Pfad mit freier optischer Wegstrecke zu entsprechend vielen optischen Empfängern 5 gesendet, wo die optischen Signale empfangen und in elektrische Signale umgewandelt werden, die einem als Evaluator ausgeführten Signalkombinierer 6' zugeführt werden.

Im Evaluator 6' wird wiederum aus den diversen zugeführten Signalen ein einziges Signal erzeugt, welches an die Signalsenke 7 übermittelt wird. Vorzugsweise wird im Evaluator aus einander entsprechenden Informationseinheiten der diversen detektierten Eingangssignale über eine Mehrheitsschaltung jeweils eine einzige Informationseinheit gebildet und dem Ausgangssignal in Richtung auf die Signalsenke 7 aufgeprägt.

Zur Fehlererkennung und -korrektur können im vorliegenden Fall bei n=3 optischen Pfaden vier Leistungsniveaus der übertragenen optischen Signale definiert werden, wie sie an den Empfängern 5 ankommen. Diese vier Leistungsniveaus werden digital den Zahlen 0, 1, 2 und 3 zugeordnet. Eine Mehrheitsschaltung kann nun ganz einfach dadurch realisiert werden, dass für den Fall, dass das Leistungsniveau 0 oder 1 im jeweils empfangenen optischen Signal detektiert wird, der entsprechenden Informationseinheit eine logische 0, im Fall, dass ein Leistungsniveau 2 oder 3 detektiert wird, der Informationseinheit eine logische 1 zugeordnet wird. Damit lässt sich ein ganz simples "2 aus 3"-Entscheidungsschema realisieren. Daneben sind aber auch andere Möglichkeiten der Ausgestaltung des Evaluators, beispielsweise mit komplizierteren Entscheidungsschemata denkbar.

Eine weitere, ganz besonders einfache Ausführungsform der erfindungsgemäßen Signalübertragungseinrichtung ist in Fig. 3 dargestellt. Das Sendeteil ist hier identisch wie in Fig. 2 gestaltet, könnte aber auch wie in Fig. 1 ausgeführt sein. Im Empfangsteil ist als Signalkombinierer 6" im Unterschied zu den vorher beschriebenen Ausführungsformen ein einziger passiver Strahlenüberlagerer vorgesehen, der sämtliche optischen Signale aus den diversen optischen Pfaden empfängt und zu einem einzigen optischen Signal zusammenführt, welches einem einzigen optischen Empfänger 5' zugeführt wird, der daraus wiederum ein in der Regel elektrisches Signal erzeugt, welches letztlich der Signalsenke 7 zugeleitet wird. Auf diese Weise werden bei n unterschiedlichen optischen Pfaden n-1 optische Empfänger eingespart.

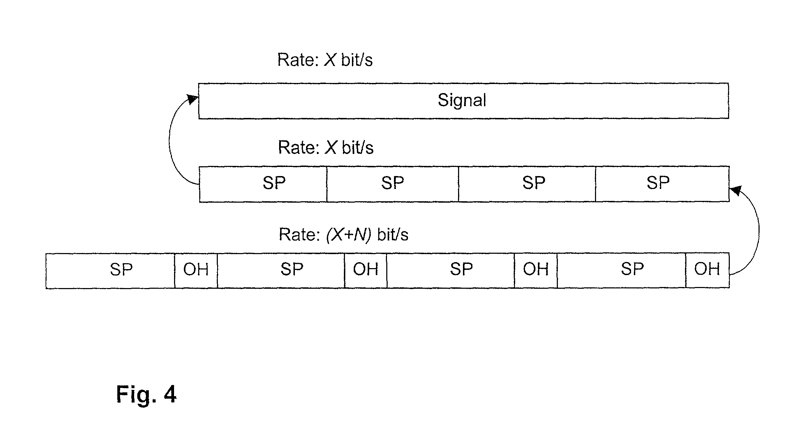

Besonders vorteilhaft ist eine Variante des erfindungsgemäßen Verfahrens, bei der eine Aufspaltung des zu übertragenden Signals vor seiner Übertragung in verschiedene Signalpakete erfolgt, wie sie schematisch im mittleren Teil von Fig. 4 dargestellt sind. Anschließend wird jedem Signalpaket eine für das jeweilige Signalpaket charakteristische Signalsequenz OH beigeordnet und zusammen mit dem jeweiligen Signalpaket mit einer höheren Bitrate als das ursprüngliche Signal übertragen, wie im unteren Teil der Fig. 4 angedeutet ist. Wenn die Bitrate für das ursprüngliche Signal X bit/s betrug, so wird das aufgespaltete Signal zusammen mit den charakteristischen Signalfrequenzen mit einer Rate von (X+N) bit/s übertragen.

Die charakteristischen Signalsequenzen OH werden anschließend zur Erkennung und gegebenenfalls zur Korrektur von Fehlern im übertragenen Signal und/oder zur Synchronisierung der Übertragungsstrecke verwendet.

## Patentansprüche

1. Verfahren zum Übertragen eines Signals zur Übermittlung von Information von einer Signalquelle (1) zu einer räumlich davon entfernten Signalsenke (7), wobei das Signal zumindest über einen Teil der Strecke zwischen der Signalquelle (1) und der Signalsenke (7) als optisches Signal über mindestens eine freie optische Wegstrecke zwischen einem optischen Sender (3; 3') und einem optischen Empfänger (5; 5') übermittelt wird,
**dadurch gekennzeichnet,**
**dass** das Signal in zwei oder mehr identische Signale vervielfältigt bzw. aufgespaltet wird,
**dass** jedes dieser untereinander identischen Signale jeweils als optisches Signal über einen eigenen optischen Pfad, der mindestens eine freie optische Wegstrecke umfasst, von einem optischen Sender (3; 3') zu einem optischen Empfänger (5; 5') übertragen wird,
und **dass** die empfangenen Signale über einen Signalkombinierer (6; 6'; 6") zusammengefasst und als einziges Signal der Signalsenke (7) zugeführt werden.

2. Verfahren nach Anspruch 1, **dadurch gekennzeichnet, dass** das Signal aus der Signalquelle (1) ein elektromagnetisches Signal ist, welches in einem Signalaufspalter (2) in mehrere mit dem ursprünglichen Signal in seinem Informationsgehalt identische Signale aufgespaltet wird, die anschließend in einer entsprechenden Anzahl von optischen Sendern (3) jeweils zu einem optischen Signal umgewandelt und/oder verstärkt werden, und dass die so erzeugten, untereinander identischen optischen Signale jeweils über einen zugeordneten optischen Pfad zeitlich und/oder räumlich parallel übertragen werden.

3. Verfahren nach Anspruch 1, **dadurch gekennzeichnet, dass** nur ein optischer Sender (3') vorgesehen ist, dem ein passiver Strahlteiler (2') nachgeschaltet ist, in welchem aus dem einen optischen Signal des optischen Senders (3') eine Vielzahl untereinander identischer optischer Signale erzeugt wird.

4. Verfahren nach einem der vorhergehenden Ansprüche, **dadurch gekennzeichnet, dass** die untereinander identischen optischen Signale jedes optischen Pfads jeweils in einem optischen Empfänger (5) in elektrische Signale umwandelt werden.

5. Verfahren nach Anspruch 4, **dadurch gekennzeichnet, dass** die elektrischen Signale aus den diversen optischen Empfängern (5) einem Signalkombinierer (6; 6') zugeführt werden, der aus den diversen elektrischen Signalen ein einziges Signal erzeugt, welches der Signalsenke (7) zugeführt wird.

6. Verfahren nach Anspruch 5, **dadurch gekennzeichnet, dass** der Signalkombinierer (6; 6') als Evaluator ausgeführt ist, in welchem aus den diversen elektrischen Eingangssignalen ein einziges Ausgangssignal erzeugt wird, welches dem Ausgangssignal aus der Signalquelle (1) am besten entspricht.

7. Verfahren nach Anspruch 6, **dadurch gekennzeichnet, dass** im Evaluator einander entsprechende Informationseinheiten der diversen Eingangssignale detektiert werden und über eine Mehrheitsschaltung daraus jeweils eine einzige Informationseinheit gebildet und dem Ausgangssignal aufgeprägt wird.

8. Verfahren nach einem der Ansprüche 4 bis 7, **dadurch gekennzeichnet, dass** in den optischen Empfängern (5) eine koordinierte Kompensation der Laufzeiten der einzelnen optischen Signale aus den unterschiedlichen optischen Pfaden vorgenommen wird.

9. Verfahren nach einem der Ansprüche 4 bis 8, **dadurch gekennzeichnet, dass** in den optischen Empfängern (5) eine koordinierte Leistungsanpassung der einzelnen optischen Signale aus den unterschiedlichen optischen Pfaden vorgenommen wird.

10. Verfahren nach einem der Ansprüche 1 bis 3, **dadurch gekennzeichnet, dass** die optischen Signale aus den diversen optischen Pfaden einem passiven Strahlenüberlagerer (6") zugeführt werden, der sie zu einem einzigen optischen Signal zusammenfasst, welches einem nachgeschalteten optischen Empfänger (5') zugeführt wird.

11. Verfahren nach einem der vorhergehenden Ansprüche, **dadurch gekennzeichnet, dass** die optischen Signale gepulst übertragen werden, wobei die den optischen Signalen aufgeprägten Informationseinheiten auf Pulse abgebildet werden.

12. Verfahren nach Anspruch 11, **dadurch gekennzeichnet, dass** auf mindestens einem optischen Pfad die Abbildung von Informationseinheiten auf Pulse invertiert und nach Durchlaufen einer optischen Strecke rückinvertiert wird.

13. Verfahren nach den Ansprüchen 10 und 11, **dadurch gekennzeichnet, dass** bei Vorhandensein eines Pulses aus mindestens einem optischen Signal der diversen optischen Pfade ein entsprechender Puls im Ausgangssignal des passiven Strahlenüberlagerers (6") erzeugt und im nachgeschalteten optischen Empfänger (5') als entsprechende Informationseinheit interpretiert wird.

14. Verfahren nach einem der vorhergehenden Ansprüche, **dadurch gekennzeichnet, dass** das zu übertragende Signal vor seiner Übertragung in Signalpakete aufgespaltet wird, dass jedem Signalpaket eine für das Signalpaket charakteristische Signalsequenz beigeordnet und zusammen mit dem jeweiligen Signalpaket mit einer höheren Bitrate als das ursprüngliche Signal übertragen wird, und dass die charakteristische Signalsequenzen zur Erkennung und gegebenenfalls zur Korrektur von Fehlern in den übertragenen Signalen und/oder zur Synchronisierung der Übertragungsstrecke verwendet werden.

15. Signalübertragungseinrichtung zur Durchführung des Verfahrens nach einem der Ansprüche 1 bis 18 mit einer Signalquelle (1) zur Erzeugung eines zu übertragenden Signals, einem Signalaufspalter (2; 2') zum Vervielfältigen bzw. Aufspalten dieses Signals in zwei oder mehr identische Signale, einer der Anzahl dieser untereinander identischen Signale entsprechenden Menge von optischen Pfaden, von denen jeder mindestens eine freie optische Wegstrecke umfasst, einem oder mehreren optischen Empfängern (5; 5') zum Empfang der übertragenen optischen Signale, sowie einem Signalkombinierer (6; 6'; 6"), in welchem die übertragenen Signale zusammengefasst und als einziges Signal einer Signalsenke (7) zugeführt werden können.
